# EUROPEAN PATENT SPECIFICATION

(11) **EP 3 406 453 B1**
(45) Date of publication and mention of the grant of the patent: **07.09.2022**
(21) Application number: 17172857.9
(22) Date of filing: 24.05.2017
(51) Int. Cl.: B41J 11/00, B41J 3/407, B41M 7/00, B41J 15/04

(54) **DEVICE FOR PRINTING AND CORRESPONDING METHOD**
VORRICHTUNG ZUM DRUCKEN UND ZUGEHÖRIGES VERFAHREN
DISPOSITIF D'IMPRESSION ET PROCÉDÉ CORRESPONDANT

(43) Date of publication of application: 28.11.2018
(73) Proprietor: Tarkett GDL S.A., 9779 Lentzweiler (LU)
(72) Inventor: BRANKOV, Igor, 9559 Wiltz (LU)
(74) Representative: Lavoix

(56) References cited:
- US-A1- 2002 166 470
- US-A1- 2007 040 885
- US-A1- 2015 030 823
- US-B2- 8 454 152

## Description

The invention relates to a device according to the preamble of claim 1.

Such a device is known from US2007/040885.

A device is known from EP2644391. This known device is adapted to print with water-based or solvent-based ink.

The known device is not adapted for printing with curable ink, in particular on a smooth surface of a flexible substrate.

EP1955849 discloses a printing device for printing with curable ink.

The present invention seeks to further improve the print quality with economic means, in particular allowing the manufacture of semi-finished products for manufacturing laminated floor products.

Further problems inherent to the above prior art are:
During digital printing four or more color inks are applied one after the other. First Cyan (C), then Magenta (M), then Yellow (Y) and finally Black (K) as example.

According to the invention, to solve this problem the device further comprises generally two ink units and two curing units, each of the curing units being able to cure only partially the ink printed by the associated printing unit. Thus, the product comprises ink that is only partially cured and can be used for manufacturing a laminated printed floor covering.

The final problem to be mentioned is the curing in short distances between the colors. A transport belt is expensive, so it should be limited in its length. Also the control of a straight drive of the belt is getting more complicated as its length increases This can only be done with a rigid transport for the substrate (e.g. a sheet or a web). Again the conveyor belt is supporting this function. Without the belt, thin substrates, like blown polymer films or thin calendered sheets, could not withstand higher impinging velocities.

The invention's object is therefore generally a device according to claim 1.

According to particular embodiments, the device can have one or more of the features stated in the dependent claims.

The invention's object is also a method as indicated in claim 14.

Further features and advantages of the invention will become apparent from the description of a preferred embodiment of the device and method according to the invention and of a printed product, illustrated by way of a non-limiting example in the accompanied drawings, wherein:
Figure 1 is a schematic view of a device according to the invention;
Figure 2 is a schematic enlarged view of a portion of the device of Figure 1;
Figure 3 is a cross sectional schematic view of a product obtained by the device of Figure 1; and
Figure 4 is a cross sectional schematic view of a product according to a variant of the product of Figure 3.

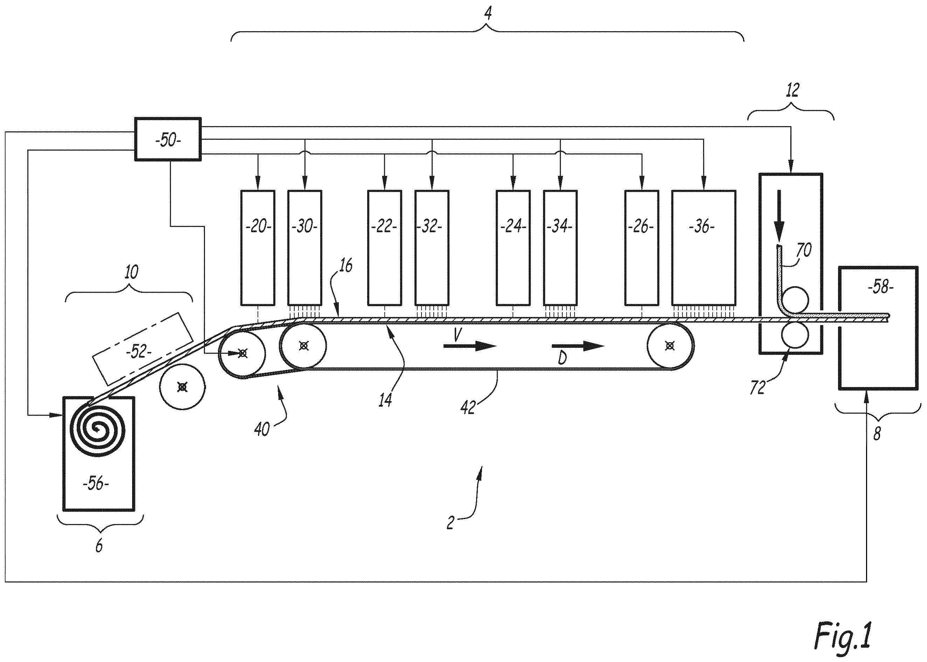

With reference to Figure 1, the device for printing according to the invention is generally designated by the reference number 2. The device 2 comprises a printing section 4, a substrate infeed section 6, a product storing section 8, a pre-treating section 10 and a laminating section 12.

The terms "upstream", "downstream" and "in-between" are used with reference to a conveying direction D defined by a conveyor means 40 (see below).

The infeed section 6 is arranged upstream of printing section 4 and the product storing section 8 is arranged downstream of printing section 4. The pre-treating section 10 is arranged in-between infeed section 6 and printing section 4 and the laminating section 12 is arranged downstream printing section 4 and upstream storing section 8.

The pre-treating section 10 is optional.

The device for printing 2 comprises also a substrate 14.

The substrate 14 is flexible and preferably has a smooth surface 16.

The term "smooth" means in the scope of the present invention that the surface 16 has a roughness of not more than 0,5 mm or not more than 0,25 mm and preferably not more than 0,2mm.

Also, the surface 16 is non-absorbent. The surface 16 is therefore, at least substantially, closed and without open pores.

The term "flexible" means that the substrate 14 deforms itself substantially under its own weight. It deforms itself under its own weight, when unsupported between two inkjet printing units, at least in the order of the printing resolution of the inkjet printing units (see below).

Preferably, the term "flexible" is defined as falling under the method described as an example in ISO DIS 10581:2011 or in ISO 24344. In this method, the flexibility is defined by the capacity of the substrate (floor) being rolled around a 20 mm mandrel without cracking of the substrate being observed.

The substrate 14 has for example a thickness that is not more than 5 mm. The substrate 14 is preferably a plastic foil in particular made of PVC, polyolefine, vinyl, polyethylene, polypropylene or polyamide or PET or a copolymer.

The substrate 14 may be a polymer support layer which is advantageously a plasticized PVC sheet or a polyolefin sheet. The thickness of the polymer support layer may be in the range of 1 to 2 mm, preferably in the range of 1.1 to 1.5 mm, and more preferably in the range of 1.1 to 1.3 mm. Preferably, the polymer support layer includes: 20 - 50 wt.% of a filler material, preferably mainly calcium carbonate. The polymer support layer preferably has a specific weight in the range of 1500 to 3000 g/m2, preferably in the range of 2000 to 2300 g/m2. The polymer support layer may be glass fiber reinforced.

The substrate 14 may be a wear layer which is e.g. a plasticized PVC film or a polyolefin film. The wear layer may comprise substantially no filler material. The wear layer may have a thickness in the range of 0.2 mm to 1.0 mm, preferably in the range of 0.35 mm to 0.8 mm. The wear layer may have a weight in the range of 300 to 800 g/m2, preferably in the range of 400 to 600 g/m2. This wear layer may advantageously have a relatively low K-value, i.e. a K-value preferably in the range of 56 to 61, and a relatively high content of plasticizers, i.e. a content of plasticizers in the range of 5 PHR - 21 PHR. Suitable plasticizers are e.g. DINCH, DOTP or DINP. A relatively low K-value as well as a relatively high content of plasticizer in the PVC warrant a lower melting / fusion point of the wear layer. Preferably, the melting / fusion point of the wear layer shall be in the range of 120°C to 180°C. Indeed, being capable to easily reach the melting point of the wear layer during lamination improves adhesion between the wear layer and the still incompletely cured printed decorative layer (printed layer 18, see below) .

In the present case the substrate 14 is a web, but the substrate can also be individual sheets.

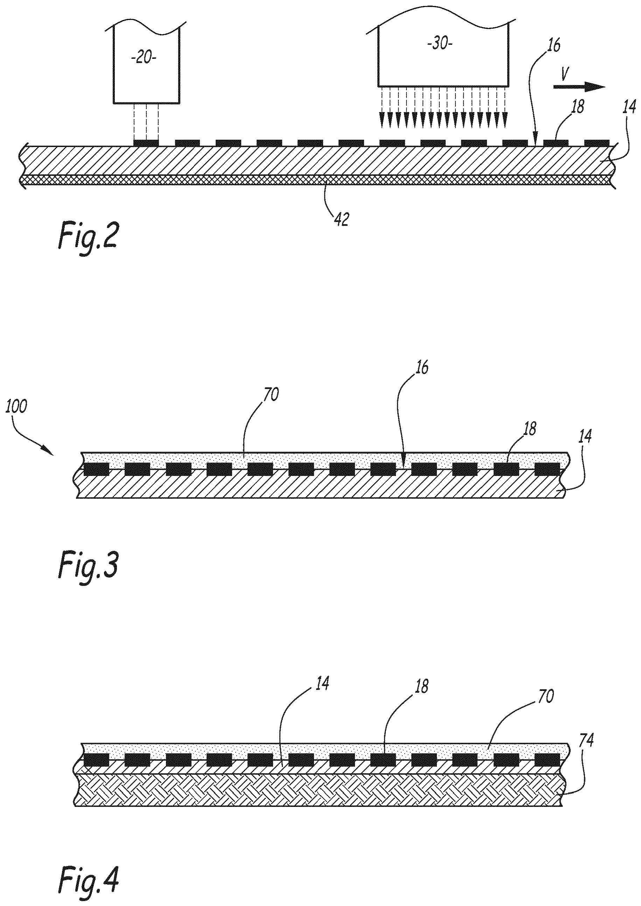

The printing section 4 is adapted to print a printed layer 18 onto the surface 16 of the substrate 14 (see Figures 2 and 3).

The printing section 4 comprises a first inkjet printing unit 20, a second inkjet printing unit 22 and further inkjet printing units, such as third 24 and fourth 26 inkjet printing units. Each inkjet printing unit 20, 22, 24, 26 is adapted to print curable ink of one basic color onto the surface 16. For example, first printing unit 20 prints Cyan, second printing unit 22 prints Magenta, third printing unit 24 prints Yellow and fourth printing unit 26 prints Black. The number of printing units can vary, but in the present invention, at least two inkjet printing units are present.

The inkjet printing units 20, 22, 24, 26 are digital inkjet printing units. They may extend across the whole width of the substrate 14 when printing so as to be able to print in a single pass.

The inkjet printing units 20, 22, 24, 26 are adapted to print with UV-curable inks, preferably inks with photo-initiators optimized for a UV spectrum in the range of 345 - 420 nm. A suitable UV-curable ink is e.g. available from AGFA, Collins Inks, 3M, Hymmen or other companies. The fluid ink has a relative density that is preferably in the range of 1 to 1.6. It is preferably deposited with a specific surface density in the range of 5 to 15 g/m2 resulting in an applied thickness after curing of 10 to 25µm.

The inkjet printing units 20, 22, 24, 26 comprise preferably each an ink reservoir containing the UV-curable ink having the respective color.

The printing section 4 comprises a first curing unit 30 arranged downstream the first inkjet printing unit 20 and upstream the second inkjet printing unit 22 and a second curing unit arranged downstream the second printing unit 22.

In the present case, the device 2 comprises one curing unit 30, 32, 34, 36 associated to each inkjet printing unit 20, 22, 24, 26 and arranged downstream of the printing unit to which it is associated. The curing units 30, 32, 34 are as well arranged upstream the subsequent printing unit.

Each curing unit 30, 32, 34, 36 is adapted to partially cure the ink printed by the associated printing unit 20, 22, 24, 26 onto the surface 16. Consequently, the first curing unit 30 is adapted to partially cure the ink printed by the first inkjet printing unit 20, and the second curing unit is adapted to partially cure the ink printed by the second inkjet printing unit.

Each curing unit 30, 32, 34, 36 is for example a UV curing unit, comprising LED UV-light sources having a (narrow) spectral emission around a central wave length in the range of 345 - 420 nm. Suitable LED sources are e.g. LEDs, having a central wave length of 365, 385, 395 or 405 nm and an energy density preferably in the range of 1 W/cm² to 10 W/cm². UV exposure time is determined so as to achieve a degree of partial curing resulting in an printed layer structure with sufficient internal cohesion but still sufficiently open to warrant a sufficient adhesion with the other layers. In case of a continuous production line through which the substrate 14 bearing the printed layer 18 to be cured travels with a velocity V, the UV exposure time will be determined by the longitudinal extension (in the direction D of movement) of the zone irradiated by the LED UV sources and the velocity V with which the decorative layer to be cured travels through this field.

It will be noted that the final degree of curing of the ink is influenced by many parameters, for example: the chemical composition of the ink; the type and quantity of photo-initiators; the type and quantity of pigments in the ink; the reflectance of the UV radiation at the ink surface; the thickness of the ink layer; the UV wavelength (nm); the UV intensity (W/cm2); and the UV dose (Joule/cm2).

The curing unit the furthest downstream in the printing section 4, in the present case curing unit 36, may have a curing capacity bigger than the curing capacity of the remaining curing units 30, 32, 34.

The device for printing 2 comprises furthermore conveyor means 40 adapted for conveying the substrate 14 substantially without mechanical tension from the first inkjet printing unit 20 to the second inkjet printing unit 24 and in particular from the first inkjet printing unit 20 to the furthest downstream inkjet printing unit, in the present case printing unit 26.

The inkjet printing units 20, 22, 24, 26 are each arranged so as to print, in particular with a single pass, onto the surface 16 while the substrate 14 is on the supporting conveyor means 40. In the present case, the conveyor means 40 comprise a transport belt 42. The conveyor means 40 is adapted to convey the substrate 14, while it is printed on, so that the substrate 14 is exclusively applied to the conveyor means 40 by gravity. In other words, when the substrate 14 is conveyed from the first inkjet printing unit 20 to the subsequent inkjet printing units 22, 24 or 26, no pressure is applied onto the substrate 14, except where applicable the pressure applied by the printing operation itself from each inkjet unit. To this end, the conveyor means are arranged substantially or exactly horizontally from the first inkjet printing unit to the furthest downstream inkjet printing unit.

Alternatively, the device for printing 2 can comprise a tackifier or adhesive by which the substrate 14 adheres to the conveyor means 40.

The device for printing 2 comprises furthermore a control unit 50 controlling at least each of the curing units 30, 32, 34, 36, and preferably one or more of the inkjet print units 20, 22, 24, 26, and the conveyor means 40. The control unit 50 may also control the infeed section 6, the storing section 8, the pre-treating section 10 and the laminating section 12.

The control unit 50 is adapted to control the first curing unit 30 so that the percentage of cure induced by the first curing unit to the ink printed by the first inkjet printing unit is below 95% or below 90%, in particular less or equal to 80% and preferably between 40% and 80%.

The control unit 50 is adapted to control the second curing unit 32 so that the percentage of cure induced by the second curing unit 32 to the ink printed by the second inkjet printing unit 22 is below 95% or below 90%, in particular less or equal to 80% and preferably between 40% and 80%.

Generally, the device comprises also a furthest downstream inkjet printing unit, which is in the present case printing unit 26, and a furthest downstream curing unit, which is in the present case curing unit 36. The furthest downstream curing unit is arranged downstream the furthest downstream inkjet printing unit 26. The furthest downstream curing unit is adapted to partially cure the ink printed by the furthest downstream inkjet printing unit. The control unit 50 is adapted to control the furthest downstream curing unit, so that when the furthest downstream curing unit 36 has partially cured the ink printed by the furthest downstream inkjet printing unit the percentage of cure of the ink printed by the furthest downstream inkjet printing unit is below 95% or below 90%, in particular less or equal to 80% and preferably between 40% and 80%.

In one particular embodiment, which is not depicted, the device 2 comprises only two inkjet print units, namely the print units 20 and 22, but no further print units. In this case the furthest downstream inkjet printing unit is the second inkjet printing unit 22. Also according to this embodiment, the device comprises only two curing units 30 and 32, but no further curing units. In this case, the furthest downstream curing unit is the second curing unit.

Generally speaking the furthest downstream inkjet printing unit is a supplementary, namely a third or fourth, inkjet printing unit. In the embodiment illustrated on Figure 1, the furthest downstream inkjet printing unit is the fourth inkjet printing unit 26.

Likewise, the furthest downstream curing unit is a supplementary, namely a third or fourth, curing unit and in the embodiment of Figure 1, the fourth curing unit 36.

The control unit 50 is adapted to control the curing units, so that when the furthest downstream curing unit 36 has cured the ink printed by the inkjet printing units 20, 22, 24, 26 the percentage of cure of the ink printed by the first inkjet printing unit 20 is below 95% or below 90%, in particular less or equal to 80% and preferably between 40% and 80%.

The control unit 50 is adapted to control, the curing units 30, 32, 34, 36 so that the degree of curing of one of the curing units of the ink printed by the inkjet printing unit, associated to the one of the curing units, differs from the degree of curing of at least one of the remaining curing units of the ink printed by the inkjet printing unit, associated to the one of the remaining curing units.

For example, the first curing unit 30 can be controlled so that the ink printed by the first inkjet printing unit 20 is cured to a degree different from the degree of curing by which the second curing unit 32 cures the ink printed by the second inkjet printing unit 22 and/or different from the degree of curing by which the third curing unit 34 cures the ink printed by the third inkjet printing unit 24 and/or different from the degree of curing by which the fourth curing unit 36 cures the ink printed by the fourth inkjet printing unit 26.

The control unit 50 may be adapted to control the curing units 30, 32, 34, 36 so that the degree of curing of each of the curing units of the ink printed by the inkjet printing unit, associated to the one of the curing units, differs from the degree of curing of all other of the remaining curing units of the ink printed by the inkjet printing unit, associated to the one of the remaining curing units. For example, the degree of curing of the first ink by the first ink curing unit 30 is different from the degree of curing by each of the second 32, third 34 and fourth 36 curing units of the ink printed by the associated inkjet print units and
the degree of curing of the second ink by the second ink curing unit 32 is different from the degree of curing by each of the third 34 and fourth 36 curing units of the ink printed by the associated inkjet print units and
the degree of curing of the third ink by the third ink curing unit 32 is different from the degree of curing by the fourth 36 curing unit of the ink printed by the fourth inkjet print unit. As an example, the first curing unit cures the first ink by 50%, the second curing unit cures the second ink by 45%, the third unit cures the third ink by 42% and the fourth curing unit cures the fourth ink by 55%.

The control unit 50 is furthermore adapted to control the degree of curing of each of the curing units 30, 32, 34, 36 of the ink printed by the inkjet printing unit 20, 22, 24, 26 associated to the curing unit increases, in particular strictly, in the downstream direction or decreases, in particular strictly, in the downstream direction.

Thus for example, the degree of curing by the first curing unit 30 of the ink printed by the first inkjet printing unit 20 is higher or equal to the degree of curing by the second curing unit 32 of the ink printed by the second inkjet printing unit 22, which in turn is higher or equal to the degree of curing by the third curing unit 34 of the ink printed by the third inkjet printing unit 24, which in turn is higher or equal to the degree of curing by the fourth curing unit 36 of the ink printed by the fourth inkjet printing unit 26.

Thus for example, the degree of curing by the first curing unit 30 of the ink printed by the first inkjet printing unit 20 is lower or equal to the degree of curing by the second curing unit 32 of the ink printed by the second inkjet printing unit 22, which in turn is lower or equal to the degree of curing by the third curing unit 34 of the ink printed by the third inkjet printing unit 24, which in turn is lower or equal to the degree of curing by the fourth curing unit 36 of the ink printed by the fourth inkjet printing unit 26.

The above control operations are executed each time during a same print operation and while printing on the same substrate or substantially the same location of the substrate.

The pre-treating section 10 is adapted to treat the surface 16 of the substrate 14 prior to printing by the first printing unit 20. To this end, the pre-treating section 10 comprises a pre-treating unit 52, which is for example a surface cleaning unit.

The laminating section 12 is adapted to laminate a counter-substrate 70 onto the substrate 14 carrying the incompletely cured printed layer 18, and this downstream of the furthest downstream curing unit, incidentally curing unit 36. To this end, the laminating section 12 comprises a laminating roller pair 72 forming a nip. The counter-substrate 70 and the substrate 14 are fed through the nip and laminated together by the roller pair 72.

In case the substrate 14 is a polymer support layer, the counter-substrate 70 is for example a wear layer, preferably having the features of the above disclosed wear layer.

In case the substrate 14 is a wear layer, the counter-substrate 70 is for example a polymer support layer, preferably having the features of the above disclosed polymer support layer.

In both cases, the product obtained by the device 2 after lamination is a floor covering element 100, as depicted in Figure 3. The floor covering element 100 comprises a layer formed by the substrate 14, a decorative layer formed by the printed layer 18 and a layer formed by the counter-substrate 70. The printed layer 18 is sandwiched between the substrate 14 and the counter-substrate 70.

The substrate infeed section 6 comprises substrate feed means 56, for example a reel unwinder which unwinds the web of substrate 14. Alternatively, in case the substrate 14 are sheets, the substrate feed means 56 comprise a sheet feeder.

The storing section 8 comprises a product receiving means 58. The product receiving means 58 can be a reel take-up or a sheet stacker.

During operation, the control unit 50 controls advantageously the conveyor means 40, the laminating section 12, the substrate feed means 56 as well the product receiving means 58 so that the feed speed of the substrate feed means, the receiving speed of the product receiving means, the laminating speed of the laminating section 12 and the conveying speed of the conveyor means 40 are identical and so that no mechanical tension is applied to the substrate 14 due to a possible difference in speed of the feed means 56, laminating section 12, receiving means 58 and conveyor means 40.

The method of printing on a substrate using the device 2 is executed in the following manner.

The substrate 14 is unwound from the substrate infeed section 6, optionally passes the pre-treating section 10, in which it is pre-treated, and enters the printing section 4. Upon entering the printing section 4, the substrate 14 is applied onto the conveyor means 40. When being conveyed by the conveyor means 40, the substrate 14 is applied all the time onto the conveyor means 40 exclusively by gravity and is exclusively transported all the time by these conveyor means 40. In other terms, the substrate 14 is not pushed by the infeed section 6 nor drawn by storing section 8, nor drawn by the laminating section 12.

Also, the surface 16 is not in contact with any other feed members during its passage in printing section 4.

Then the first printing unit 20 prints a first ink onto the surface 16 in a single pass. Subsequently, curing unit 30 partially cures the ink which has been printed by printing unit 20.

Subsequently, the substrate 14 passes to the second printing unit 22 in which a second ink is printed onto the surface 16 in a single pass. As the first ink has been partially cured, the second ink is printed on the surface 16 without risk of mixing with the first ink. Also, as the conveyor means 40 displace the substrate 14 without mechanical tension, the substrate 14 is in perfect register with the ink applied by printing units 20, 22.

The substrate 14 passes then the second curing unit 32, partially curing the second ink. The substrate 14 passes then the third printing unit 24 and third curing unit 34, partially curing the third ink. Finally, the substrate 14 passes the fourth printing unit 26 and fourth curing unit 36, partially curing the fourth ink.

The third and fourth ink applied by third and fourth printing units 24, 26 is also partially cured and in register owing to the conveyor means 40 and curing units 34, 36.

The substrate 14 is then passed by the conveyor means 40 to the laminating section 12 where it is laminated with the counter-substrate 70.

Concerning the lamination process used, either a point pressure or time pressure lamination process may be used. When a point pressure process is used, the substrate 14 and/or the counter-substrate 70 are heated up to lamination temperature either by contact with a heated surface (e.g. by contact with a heated drum surface) or by radiation heating (as e.g. IR heating). Thereafter, the substrate 14 and the wear layer 12 are pressed together in a single contact point (e.g. between two pressure rollers), wherein the still incompletely cured printed layer 18 is sandwiched between the substrate 14 and the counter-substrate 70. To enhance adhesion, multiple pressure rollers can be used in series.

Finally, storing section 8 receives the laminate or product comprising the substrate 14, counter-substrate 70 and printed layer 18 and takes up the laminate for example onto a reel. Alternatively, the laminate can be cut into sheets in the storing section and stacked.

The finished product obtained is the floor covering element 100 having a substrate 14, a counter-substrate 70 and a printed layer 18 having a pattern, and being arranged between the substrate 14 and the counter-substrate 70.

Alternatively, in an arrangement not covered by the claims, the laminating section 12 is omitted and the substrate 14 with the partially cured printed layer 18 is fed to the storing section 8 as semi-finished product for further processing at another manufacturing site.

Figure 4 shows a variant of the product obtained. The variant differs from the above disclosed features only by the following.

The substrate 14 onto which the print section 4 prints is a decorative layer support film.

The substrate 14 is for example a thin decorative layer support film (e.g. a thickness in the range of 0,09 mm - 0,18 mm), which may be non-reinforced. This decorative layer support film is preferably a plasticized PVC film, for example including: 10 - 50 wt.% of a filler material, preferably mainly calcium carbonate; and/or 2 - 20 wt.%, preferably 10 - 20 wt.%, of titanium dioxide, and/or 2 - 20 wt.%, preferably between 10 - 20 wt.%, of softening polymers, in particular PLA, PMMA or PVAC. The support film preferably has a whiteness of minimum 92 (L-Value) and an opacity in the range of 95 to 99.

During manufacture by the device 2, the printed layer 18 is printed on the surface 16 of the substrate 14 with the printing units 20, 22, 24, 26.

As before, each ink of printed layer 18 is incompletely or partially cured for example with UV LED sources of curing units 30, 32, 34, 36. The substrate 14 bearing the incompletely or partially cured printed layer 18 is thereafter laminated between a counter-substrate 70, which can be the above disclosed wear layer, and a further counter-substrate 74, which can be the above disclosed polymer support layer. The printed layer 18 is sandwiched between the substrate 14 and the counter-substrate 70. The further counter-substrate 74 is applied to the face of the substrate not carrying the printed layer 18, i.e. the lower face of the substrate 14.

The percentage of cure of the ink can be determined directly, for example by Fourier transform infrared spectroscopy (FT-IR). This test is based infrared radiation absorption by chemical bonds. Each bond type has a distinctive response at a given wavenumber where the height of the peak represents the number of bonds. As the polymer chain is formed during curing, the peak decreases and finally disappears. This FT-IR test allows the measurement of cross-linking progress (i.e. the percentage of cross-linking achieved as a function of time).

It remains to be noted that printing and UV curing advantageously take place under a nitrogen atmosphere. This nitrogen atmosphere still further improves a homogenous progress of the curing in the decorative layer by preventing oxygen inhibition at the surface of the decorative layer.

Further features and advantages of the invention may be:
The substrate is an extruded or blown polymer film. The substrate is made from PET.

The printing units are fixed.

The substrate 14 is applied onto the conveyor means 40 and the conveyor means 40 conveys the substrate in the printing section 4 so as to keep the substrate aligned an in register with respect to each printing unit and each curing unit.

Also, thanks to the curing devices, the length of the conveyor means can be kept short.

The supporting conveyor means 40 is adapted to convey the substrate 14 while it is exclusively applied by gravity to the supporting conveyor means.

The method as disclosed may use a device as above, wherein the supporting conveyor means are operated at a speed identical to the speed of the substrate infeed section and the substrate storing section.

The method according to the invention may include one or more of the following steps:
- Partially curing the ink printed by the furthest downstream inkjet printing unit with the furthest downstream curing unit, in particular so that when the furthest downstream curing unit has partially cured the ink printed by the furthest downstream inkjet printing unit, the percentage of cure of the ink printed by the furthest downstream inkjet printing unit is below 95% or below 90%, in particular less or equal to 80% and preferably between 40% and 80%.
- Curing the inks printed by the printing units, so that when the furthest downstream curing unit 36 has cured the ink printed by all of the inkjet printing units the percentage of cure of the ink printed by the first inkjet printing unit is below 95% or below 90%, in particular less or equal to 80% and preferably between 40% and 80%.
- Controlling the curing units so that the degree of curing of one of the curing units of the ink printed by the inkjet printing unit, associated to the one of the curing units, differs from the degree of curing of at least one of the remaining curing units of the ink printed by the inkjet printing unit, associated to the one of the remaining curing units.
- During the step of laminating the substrate and the counter-substrate together, the ink of the printed layer is in a partially cured state and has in particular a percentage of cure of below 95% or below 90%, in particular less or equal to 80% and preferably between 40% and 80%.

Finally, each time the expression "adapted to" is used with respect to an operation or method step in the present patent application, it is understood that the corresponding operation or method step by itself is also encompassed and thus disclosed.

## Claims

1. Device (2) for printing on a surface (16) of a substrate (14),
the device (2) comprising
- a printing section (4) comprising a first inkjet printing unit (20) and a second inkjet printing unit (22, 24, 26) and adapted to print a printed layer (18) onto the surface (16),
- a supporting conveyor means (40) adapted for conveying the substrate substantially without mechanical tension from the first inkjet printing unit to the second inkjet printing unit, the inkjet printing units being arranged so as to be adapted to print, in particular with a single-pass, onto the surface of the substrate while the substrate is on the supporting conveyor means,
wherein
the device (2) comprises at least a first curing unit (30) arranged downstream the first inkjet printing unit (20) and upstream the second inkjet printing unit (22, 24, 26),
the first curing unit (30) is adapted to partially cure the ink printed by the first inkjet printing unit,
the device comprises a second curing unit (32, 34, 36) arranged downstream the second inkjet printing unit (22, 24, 26) wherein
the second curing unit is adapted to partially cure the ink printed by the second inkjet printing unit and wherein
the device comprises a control unit (50) adapted to control each of the curing units (30, 32, 34, 36), **characterized in that**
the device comprises a laminating section (12) adapted to laminate a counter-substrate (70) onto the substrate (14) carrying the incompletely cured printed layer (18), and this downstream of the furthest downstream curing unit (36), **in that** the laminating section (12) comprises a laminating roller pair (72) forming a nip, and **in that** the counter-substrate (70) and the substrate (14) are fed through the nip and laminated together by the roller pair (72), and
**in that** the product obtainable by the device is a floor covering element, the floor covering element (100) comprising a layer formed by the substrate (14), a decorative layer formed by the printed layer (18) and a layer formed by the counter-substrate (70), the printed layer (18) being sandwiched between the substrate (14) and the counter-substrate (70), **in that**
the control unit (50) is adapted to control the first curing unit (30) so that the percentage of cure induced by the first curing unit to the ink printed by the first inkjet printing unit (20) is below 95%, and **in that**
the control unit (50) is adapted to control the second curing unit (32, 34, 36) so that the percentage of cure induced by the second curing unit to the ink printed by the second inkjet printing (22, 24, 26) unit is below 95%.

2. Device according to claim 1, wherein the control unit (50) is adapted to control the first curing unit (30) so that the percentage of cure induced by the first curing unit to the ink printed by the first inkjet printing unit (20) is below 90%, in particular less or equal to 80% and preferably between 40% and 80%.

3. Device according to claim 1 or 2, wherein the control unit (50) is adapted to control the second curing unit (32, 34, 36) so that the percentage of cure induced by the second curing unit to the ink printed by the second inkjet printing (22, 24, 26) unit is below 90%, in particular less or equal to 80% and preferably between 40% and 80%.

4. Device according to any one of claims 1 to 3, wherein the device comprises
a furthest downstream inkjet printing unit (26), and
a furthest downstream curing unit (36) arranged downstream the furthest downstream inkjet printing unit (26), and wherein
the furthest downstream curing unit is adapted to partially cure the ink printed by the furthest downstream inkjet printing unit,
and the control unit is adapted to control the furthest downstream curing unit, so that when the furthest downstream curing unit (36) has partially cured the ink printed by the furthest downstream inkjet printing unit,
the percentage of cure of the ink printed by the furthest downstream inkjet printing unit is below 95% or below 90%, in particular less or equal to 80% and preferably between 40% and 80%.

5. Device according to claim 4, wherein either
the furthest downstream inkjet printing unit (36) is the second inkjet printing unit, and
the furthest downstream curing unit is the second curing unit, or
the furthest downstream inkjet printing unit is a supplementary, namely a third or fourth, inkjet printing unit, and
the furthest downstream curing unit is a supplementary, namely a third or fourth, curing unit.

6. Device according to claim 4 or 5, wherein
the control unit (50) is adapted to control the curing units, so that when the furthest downstream curing unit (36) has cured the ink printed by the inkjet printing units,
the percentage of cure of the ink printed by the first inkjet printing unit is below 95% or below 90%, in particular less or equal to 80% and preferably between 40% and 80%.

7. Device according to any one of the preceding claims, wherein the control unit (50) is adapted to control the curing units (30, 32, 34, 36) so that the degree of curing of one of the curing units of the ink printed by the inkjet printing unit, associated to the one of the curing units, differs from the degree of curing of at least one of the remaining curing units of the ink printed by the inkjet printing unit, associated to the one of the remaining curing units.

8. Device according to claim 7, wherein the control unit (50) is adapted to control the curing units (30, 32, 34, 36) so that the degree of curing of each of the curing units of the ink printed by the inkjet printing unit, associated to the one of the curing units, differs from the degree of curing of all other of the remaining curing units of the ink printed by the inkjet printing unit, associated to the one of the remaining curing units.

9. Device according to claim 7 or 8, wherein the degree of curing of each of the curing units of the ink printed by the inkjet printing unit, associated to the curing unit increases, in particular strictly, in the downstream direction or decreases, in particular strictly, in the downstream direction.

10. Device according to any one of the preceding claims wherein each of the curing units comprises a UV-light source, for example an LED-UV source or a mercury lamp.

11. Device according to any one of the preceding claims, wherein each of the inkjet printing units (20, 22, 24, 26) is adapted to print with a UV-curable ink, preferably each of the inkjet printing units comprises a reservoir containing the UV-curable ink.

12. Device according to any one of the preceding claims, wherein the supporting conveyor means (40) include a conveyor belt (42).

13. Device according to any one of the preceding claims, wherein the device comprises the substrate (14) having the surface (16), in particular the substrate being
a polymer support layer, a polymer wear layer or a layer support film,
preferably the substrate being a plastic foil, preferably made of PVC, polyolefine, vinyl, polyethylene, polypropylene, PET or a copolymer,
in particular wherein the surface (16) is a smooth surface and the substrate (14) is a flexible substrate.

14. Method of printing on a surface of a substrate wherein the method of printing is a method of printing using a device according to any one of the preceding claims and comprising the following successive steps:
- printing on the surface of the substrate using the first inkjet printing unit,
- partially curing the ink printed by the first inkjet printing unit using the first curing unit,
- printing on the surface of the substrate using the second inkjet printing unit,
- partially curing the ink printed by the second inkjet printing unit using the second curing unit, thereby obtaining a partially cured printed layer (18),
- providing a counter-substrate (70), and
- laminating the substrate (14) with the printed layer (18) and the counter-substrate together, thereby forming a product (100) in which the printed layer extends between the substrate and the counter-substrate.

## Patentansprüche

1. Vorrichtung (2) zum Drucken auf einer Oberfläche (16) eines Substrats (14),
die Vorrichtung (2) umfassend:
- einen Druckbereich (4), umfassend eine erste Tintenstrahldruckeinheit (20) und eine zweite Tintenstrahldruckeinheit (22, 24, 26) und die geeignet ist, eine gedruckte Schicht (18) auf die Oberfläche (16) zu drucken,
- eine unterstützende Fördereinrichtung (40), die angepasst ist, um das Substrat im Wesentlichen ohne mechanische Spannung von der ersten Tintenstrahldruckeinheit zu der zweiten Tintenstrahldruckeinheit zu befördern, wobei die Tintenstrahldruckeinheiten angeordnet sind, um angepasst zu sein, insbesondere in einem einzigen Durchgang auf die Oberfläche des Substrats zu drucken, während das Substrat auf der unterstützenden Fördereinrichtung ist,
wobei
die Vorrichtung (2) mindestens eine erste Aushärtungseinheit (30) umfasst, die stromabwärts von der ersten Tintenstrahldruckeinheit (20) und stromaufwärts von der zweiten Tintenstrahldruckeinheit (22, 24, 26) angeordnet ist,
die erste Aushärtungseinheit (30) angepasst ist, um die von der ersten Tintenstrahldruckeinheit gedruckte Tinte teilweise auszuhärten,
die Vorrichtung eine zweite Aushärtungseinheit (32, 34, 36) umfasst, die stromabwärts von der zweiten Tintenstrahldruckeinheit (22, 24, 26) angeordnet ist, wobei
die zweite Aushärtungseinheit angepasst ist, um die von der zweiten Tintenstrahldruckeinheit gedruckte Tinte teilweise auszuhärten, und wobei
die Vorrichtung eine Steuereinheit (50) umfasst, die angepasst ist, um jede der Aushärtungseinheiten (30, 32, 34, 36) zu steuern, **dadurch gekennzeichnet, dass**
die Vorrichtung einen Laminierbereich (12) umfasst, der angepasst ist, um ein Gegensubstrat (70) auf das Substrat (14) zu laminieren, das die unvollständig ausgehärtete gedruckte Schicht (18) trägt, und dies stromabwärts von der am weitesten stromabwärigen Aushärtungseinheit (36), dass der Laminierbereich (12) ein Laminierwalzenpaar (72) umfasst, das einen Spalt bildet, und dass das Gegensubstrat (70) und das Substrat (14) durch den Spalt hindurchgeführt und durch das Walzenpaar (72) zusammen laminiert werden, und
dass das durch die Vorrichtung erlangbare Produkt ein Bodenbelagelement ist, das Bodenbelagelement (100) umfassend eine durch das Substrat (14) gebildete Schicht, eine durch die gedruckte Schicht (18) gebildete Dekorschicht und eine durch das Gegensubstrat (70) gebildete Schicht, wobei die gedruckte Schicht (18) zwischen dem Substrat (14) und dem Gegensubstrat (70) eingefügt ist, dass
die Steuereinheit (50) angepasst ist, um die erste Aushärtungseinheit (30) zu steuern, sodass der Prozentsatz der Aushärtung, der durch die erste Aushärtungseinheit in die durch die erste Tintenstrahldruckeinheit (20) gedruckte Tinte induziert wird, unter 95 % ist, und dass
die Steuereinheit (50) angepasst ist, um die zweite Aushärtungseinheit (32, 34, 36) zu steuern, sodass der Prozentsatz der Aushärtung, der durch die zweite Aushärtungseinheit in die durch die zweite Tintenstrahldruckeinheit (22, 24, 26) gedruckte Tinte induziert wird, unter 95 % ist.

2. Vorrichtung nach Anspruch 1, wobei die Steuereinheit (50) angepasst ist, um die erste Aushärtungseinheit (30) zu steuern, sodass der Prozentsatz der Aushärtung, der durch die erste Aushärtungseinheit in die von der ersten Tintenstrahldruckeinheit (20) gedruckte Tinte induziert wird, unter 90 %, insbesondere unter oder gleich 80 % und vorzugsweise zwischen 40 % und 80 % ist.

3. Vorrichtung nach Anspruch 1 oder 2, wobei die Steuereinheit (50) angepasst ist, um die zweite Aushärtungseinheit (32, 34, 36) zu steuern, sodass der Prozentsatz der Aushärtung, der durch die zweite Aushärtungseinheit in die von der zweiten Tintenstrahldruckeinheit (22, 24, 26) gedruckte Tinte induziert wird, unter 90 %, insbesondere unter oder gleich 80 % und vorzugsweise zwischen 40 % und 80 % ist.

4. Verfahren nach einem der Ansprüche 1 bis 3, wobei die Vorrichtung Folgendes umfasst:
eine am weitesten stromabwärtige Tintenstrahldruckeinheit (26), und
eine am weitesten stromabwärtige Aushärtungseinheit (36), die stromabwärts von der am weitesten stromabwärtigen Tintenstrahldruckeinheit (26) angeordnet ist, und wobei
die am weitesten stromabwärtige Aushärtungseinheit angepasst ist, um die von der am weitesten stromabwärtigen Tintenstrahldruckeinheit gedruckte Tinte teilweise auszuhärten,
und die Steuereinheit angepasst ist, um am weitesten stromabwärtige Aushärtungseinheit zu steuern, sodass, wenn die am weitesten stromabwärtige Aushärtungseinheit (36) die von der am weitesten stromabwärtigen Tintenstrahldruckeinheit gedruckte Tinte teilweise ausgehärtet hat,
der Prozentsatz der Aushärtung der Tinte, die von der am weitesten stromabwärtigen Tintenstrahldruckeinheit gedruckt wird, unter 95 % oder unter 90 %, insbesondere unter oder gleich 80 % und vorzugsweise zwischen 40 % und 80 % ist.

5. Vorrichtung nach Anspruch 4, wobei entweder
die am weitesten stromabwärtige Tintenstrahldruckeinheit (36) die zweite Tintenstrahldruckeinheit ist, und
die am weitesten stromabwärtige Aushärtungseinheit die zweite Aushärtungseinheit ist, oder
das am weitesten stromabwärtige Tintenstrahldruckeinheit ein zusätzliches, nämlich eine dritte oder vierte Tintenstrahldruckeinheit ist, und
die am weitesten stromabwärtige Aushärtungseinheit eine zusätzliche, nämlich eine dritte oder vierte Aushärtungseinheitm ist.

6. Vorrichtung nach Anspruch 4 oder 5, wobei
die Steuereinheit (50) angepasst ist, um die Aushärtungseinheiten zu steuern, sodass, wenn die am weitesten stromabwärtige Aushärtungseinheit (36) die von den Tintenstrahldruckeinheiten gedruckte Tinte ausgehärtet hat,
der Prozentsatz der Aushärtung der von der ersten Tintenstrahldruckeinheit gedruckten Tinte unter 95 % oder unter 90 %, insbesondere unter oder gleich 80 % und vorzugsweise zwischen 40 % und 80 % ist.

7. Vorrichtung nach einem der vorherigen Ansprüche, wobei die Steuereinheit (50) angepasst ist, um die Aushärtungseinheiten (30, 32, 34, 36) zu steuern, sodass der Aushärtungsgrad einer der Aushärtungseinheiten der von der Tintenstrahldruckeinheit gedruckten Tinte, die mit der einen der Aushärtungseinheiten assoziiert ist, sich von dem Aushärtungsgrad mindestens einer der übrigen Aushärtungseinheiten der von der Tintenstrahldruckeinheit gedruckten Tinte, die mit der einen der übrigen Aushärtungseinheiten assoziiert ist, unterscheidet.

8. Vorrichtung nach Anspruch 7, wobei die Steuereinheit (50) angepasst ist, um die Aushärtungseinheiten (30, 32, 34, 36) zu steuern, sodass der Aushärtungsgrad von jeder der Aushärtungseinheiten der von der Tintenstrahldruckeinheit gedruckten Tinte, die mit der einen der Aushärtungseinheiten assoziiert ist, sich von dem Aushärtungsgrad von allen anderen der übrigen Aushärtungseinheiten der von der Tintenstrahldruckeinheit gedruckten Tinte, die mit der einen der übrigen Aushärtungseinheiten assoziiert ist, unterscheidet.

9. Vorrichtung nach Anspruch 7 oder 8, **dadurch gekennzeichnet, dass** der Aushärtungsgrad von jeder der Aushärtungseinheiten der von dem Tintenstrahldruckeinheit gedruckten Tinte, die mit der Aushärtungseinheit assoziiert ist, in stromabwärtiger Richtung, insbesondere strikt, zunimmt oder in stromabwärtiger Richtung, insbesondere strikt, abnimmt.

10. Vorrichtung nach einem der vorherigen Ansprüche, wobei jede der Aushärtungseinheiten eine UV-Lichtquelle, z. B. eine LED-UV-Quelle oder eine Quecksilberlampe, umfasst.

11. Vorrichtung nach einem der vorherigen Ansprüche, wobei jede der Tintenstrahldruckeinheiten (20, 22, 24, 26) zum Drucken mit einer UV-härtbaren Tinte angepasst ist, wobei vorzugsweise jede der Tintenstrahldruckeinheiten einen Behälter umfasst, der die UV-härtbare Tinte enthält.

12. Vorrichtung nach einem der vorherigen Ansprüche, wobei die unterstützenden Fördereinrichtung (40) ein Förderband (42) beinhaltet.

13. Vorrichtung nach einem der vorherigen Ansprüche, wobei die Vorrichtung das Substrat (14) umfasst, das die Oberfläche (16) aufweist, wobei das Substrat insbesondere
eine Polymerträgerschicht, eine Polymerverschleißschicht oder ein Schichtträgerfilm ist,
vorzugsweise wobei das Substrat eine Kunststofffolie ist vorzugsweise gefertigt aus PVC, Polyolefin, Vinyl, Polyethylen, Polypropylen, PET oder einem Copolymer,
insbesondere, wenn die Oberfläche (16) eine glatte Oberfläche ist und das Substrat (14) ein flexibles Substrat ist.

14. Verfahren zum Drucken auf einer Oberfläche eines Substrats
wobei
das Druckverfahren ist ein Druckverfahren unter Verwendung einer Vorrichtung nach einem der vorherigen Ansprüche ist und umfassend die folgenden aufeinanderfolgenden Schritte:
- Drucken auf der Oberfläche des Substrats unter Verwendung der ersten Tintenstrahldruckeinheit,
- teilweises Aushärten der von der ersten Tintenstrahldruckeinheit gedruckten Tinte unter Verwendung der ersten Aushärtungseinheit,
- Drucken auf der Oberfläche des Substrats unter Verwendung der zweiten Tintenstrahldruckeinheit,
- teilweises Aushärten der durch die zweite Tintenstrahldruckeinheit gedruckten Tinte unter Verwendung der zweiten Aushärtungseinheit, wodurch eine teilweise ausgehärtete gedruckte Schicht (18) erlangt wird,
- Bereitstellen eines Gegensubstrats (70), und
- Laminieren des Substrats (14) mit der gedruckten Schicht (18) und dem Gegensubstrat zusammen, wodurch ein Produkt (100) gebildet wird, bei dem sich die gedruckte Schicht zwischen dem Substrat und dem Gegensubstrat erstreckt.

## Revendications

1. Dispositif (2) d'impression sur une surface (16) d'un substrat (14),
le dispositif (2) comprenant :
- une section d'impression (4) comprenant une première unité d'impression à jet d'encre (20) et une deuxième unité d'impression à jet d'encre (22, 24, 26) et conçue pour imprimer une couche imprimée (18) sur la surface (16),
- un moyen de transport de support (40) conçu pour transporter le substrat sensiblement sans tension mécanique depuis la première unité d'impression à jet d'encre vers la deuxième unité d'impression à jet d'encre, les unités d'impression à jet d'encre étant disposées de manière à permettre l'impression, en particulier en un seul passage, sur la surface du substrat tandis que le substrat est sur le moyen de transport de support,
dans lequel
le dispositif (2) comprend au moins une première unité de durcissement (30) disposée en aval de la première unité d'impression à jet d'encre (20) et en amont de la deuxième unité d'impression à jet d'encre (22, 24, 26),
la première unité de durcissement (30) est conçue pour durcir partiellement l'encre imprimée par la première unité d'impression à jet d'encre,
le dispositif comprend une deuxième unité de durcissement (32, 34, 36) disposée en aval de la deuxième unité d'impression à jet d'encre (22, 24, 26) dans lequel
la deuxième unité de durcissement est conçue pour durcir partiellement l'encre imprimée par la deuxième unité d'impression à jet d'encre et dans lequel
le dispositif comprend une unité de commande (50) conçue pour commander chacune des unités de durcissement (30, 32, 34, 36), **caractérisé en ce que**
le dispositif comprend une section de stratification (12) conçue pour stratifier un contre-substrat (70) sur le substrat (14) portant la couche imprimée incomplètement durcie (18), et ce en aval de l'unité de durcissement (36) la plus en aval, **en ce que** la section de stratification (12) comprend une paire de rouleaux de stratification (72) formant une fente, et **en ce que** le contre-substrat (70) et le substrat (14) sont amenés à travers la fente et stratifiés ensemble par la paire de rouleaux (72), et
**en ce que** le produit pouvant être obtenu par le dispositif est un élément de revêtement de sol, l'élément de revêtement de sol (100) comprenant une couche formée par le substrat (14), une couche décorative formée par la couche imprimée (18) et une couche formée par le contre-substrat (70), la couche imprimée (18) étant intercalée entre le substrat (14) et le contre-substrat (70), **en ce que**
l'unité de commande (50) est conçue pour commander la première unité de durcissement (30) de sorte que le pourcentage de durcissement induit par la première unité de durcissement sur l'encre imprimée par la première unité d'impression à jet d'encre (20) est inférieur à 95 %, et **en ce que**
l'unité de commande (50) est conçue pour commander la deuxième unité de durcissement (32, 34, 36) de sorte que le pourcentage de durcissement induit par la deuxième unité de durcissement sur l'encre imprimée par la deuxième unité d'impression à jet d'encre (22, 24, 26) est inférieur à 95 %.

2. Dispositif selon la revendication 1, dans lequel l'unité de commande (50) est conçue pour commander la première unité de durcissement (30) de sorte que le pourcentage de durcissement induit par la première unité de durcissement sur l'encre imprimée par la première unité d'impression à jet d'encre (20) est inférieur à 90 %, notamment inférieur ou égal à 80 % et de préférence compris entre 40 % et 80 %.

3. Dispositif selon la revendication 1 ou 2, dans lequel l'unité de commande (50) est conçue pour commander la deuxième unité de durcissement (32, 34, 36) de sorte que le pourcentage de durcissement induit par la deuxième unité de durcissement sur l'encre imprimée par la deuxième unité d'impression à jet d'encre (22, 24, 26) est inférieur à 90 %, notamment inférieur ou égal à 80 % et de préférence compris entre 40 % et 80 %.

4. Dispositif selon l'une quelconque des revendications 1 à 3, le dispositif comprenant
une unité d'impression à jet d'encre la plus en aval (26), et
une unité de durcissement la plus en aval (36) disposée en aval de l'unité d'impression à jet d'encre la plus en aval (26), et dans lequel
l'unité de durcissement la plus en aval est conçue pour durcir partiellement l'encre imprimée par l'unité d'impression à jet d'encre la plus en aval,
et l'unité de commande est conçue pour commander l'unité de durcissement en aval la plus éloignée, de sorte que lorsque l'unité de durcissement en aval la plus éloignée (36) a partiellement durci l'encre imprimée par l'unité d'impression à jet d'encre en aval la plus éloignée,
le pourcentage de durcissement de l'encre imprimée par l'unité d'impression à jet d'encre la plus en aval est inférieur à 95 % ou inférieur à 90 %, notamment inférieur ou égal à 80 % et de préférence compris entre 40 % et 80 %.

5. Dispositif selon la revendication 4, dans lequel soit
l'unité d'impression à jet d'encre la plus en aval (36) est la deuxième unité d'impression à jet d'encre, et
l'unité de durcissement la plus en aval est la deuxième unité de durcissement, soit
l'unité d'impression à jet d'encre la plus en aval est une unité d'impression à jet d'encre supplémentaire, à savoir une troisième ou une quatrième unité d'impression à jet d'encre, et
l'unité de durcissement la plus en aval est une unité de durcissement supplémentaire, à savoir une troisième ou une quatrième unité de durcissement.

6. Dispositif selon la revendication 4 ou 5, dans lequel
l'unité de commande (50) est conçue pour commander les unités de durcissement, de sorte que lorsque l'unité de durcissement la plus en aval (36) a durci l'encre imprimée par les unités d'impression à jet d'encre,
le pourcentage de durcissement de l'encre imprimée par la première unité d'impression à jet d'encre est inférieur à 95 % ou inférieur à 90 %, en particulier inférieur ou égal à 80 % et de préférence compris entre 40 % et 80 %.

7. Dispositif selon l'une quelconque des revendications précédentes, dans lequel l'unité de commande (50) est conçue pour commander les unités de durcissement (30, 32, 34, 36) de sorte que le degré de durcissement de l'une des unités de durcissement de l'encre imprimée par l'unité d'impression à jet d'encre, associée à l'une des unités de durcissement, diffère du degré de durcissement d'au moins une des unités de durcissement restantes de l'encre imprimée par l'unité d'impression à jet d'encre, associée à l'une des unités de durcissement restantes.

8. Dispositif selon la revendication 7, dans lequel l'unité de commande (50) est conçue pour commander les unités de durcissement (30, 32, 34, 36) de sorte que le degré de durcissement de chacune des unités de durcissement de l'encre imprimée par l'unité d'impression à jet d'encre, associée à l'une des unités de durcissement, diffère du degré de durcissement de toutes les autres unités de durcissement restantes de l'encre imprimée par l'unité d'impression à jet d'encre, associée à l'une des unités de durcissement restantes.

9. Dispositif selon la revendication 7 ou 8, dans lequel le degré de durcissement de chacune des unités de durcissement de l'encre imprimée par l'unité d'impression à jet d'encre, associée à l'unité de durcissement augmente, de manière particulièrement notable, dans le sens aval ou diminue, de manière particulièrement notable, dans le sens aval.

10. Dispositif selon l'une quelconque des revendications précédentes dans lequel chacune des unités de durcissement comprend une source de lumière ultraviolette, par exemple une source DEL-UV ou une lampe à mercure.

11. Dispositif selon l'une quelconque des revendications précédentes, dans lequel chacune des unités d'impression à jet d'encre (20, 22, 24, 26) est conçue pour imprimer avec une encre durcissable aux UV, de préférence chacune des unités d'impression à jet d'encre comprend un réservoir contenant l'encre durcissable aux UV.

12. Dispositif selon l'une quelconque des revendications précédentes, dans lequel les moyens de transport de support (40) comprennent une bande transporteuse (42).

13. Dispositif selon l'une quelconque des revendications précédentes, le dispositif comprenant le substrat (14) ayant la surface (16), le substrat étant notamment
une couche de support polymère, une couche d'usure en polymère ou un film de support de couche,
le substrat étant de préférence une feuille de plastique, de préférence constituée de PVC, de polyoléfine, de vinyle, de polyéthylène, de polypropylène, de PET ou d'un copolymère,
en particulier dans lequel la surface (16) est une surface lisse et le substrat (14) est un substrat flexible.

14. Procédé d'impression sur une surface d'un substrat
dans lequel
le procédé d'impression est un procédé d'impression utilisant un dispositif selon l'une quelconque des revendications précédentes et comprenant les étapes successives suivantes :
- l'impression sur la surface du substrat à l'aide de la première unité d'impression à jet d'encre,
- le durcissement partiel de l'encre imprimée par la première unité d'impression à jet d'encre à l'aide de la première unité de durcissement,
- l'impression sur la surface du substrat à l'aide de la deuxième unité d'impression à jet d'encre,
- le durcissement partiel de l'encre imprimée par la deuxième unité d'impression à jet d'encre à l'aide de la deuxième unité de durcissement, obtenant ainsi une couche imprimée partiellement durcie (18),
- la fourniture d'un contre-substrat (70), et
- la stratification du substrat (14) avec la couche imprimée (18) et le contre-substrat ensemble, formant ainsi un produit (100) dans lequel la couche imprimée s'étend entre le substrat et le contre-substrat.
